# EUROPEAN PATENT APPLICATION

(11) **EP 3 888 891 A1**
(43) Date of publication of application: **06.10.2021**
(21) Application number: 21162548.8
(22) Date of filing: 15.03.2021
(51) Int. Cl.: B29C 64/393, B22F 10/31, B22F 10/85, B22F 12/90, B33Y 50/02

(54) **THREE-DIMENSIONAL FABRICATING APPARATUS, CONTROLLER, AND FABRICATING METHOD**

(30) Priority: 30.03.2020 JP 2020060796
(71) Applicant: Ricoh Company, Ltd., Tokyo 143-8555 (JP)
(72) Inventor: YOSHIGAE, Takahisa, Tokyo, 143-8555 (JP)
(74) Representative: SSM Sandmair

(57) **Abstract**

A three-dimensional fabricating apparatus (100) includes a fabricating device (110), an imaging device (280), and a control unit (330). The fabricating device (110) is configured to fabricate a three-dimensional object. The imaging device (280) is configured to capture an image including identification information marked on the fabricating device (110). The control unit (330) is configured to control an operation of the fabricating device (110) based on the image captured by the imaging device (280).

## Description

### BACKGROUND

### Technical Field

Embodiments of the present disclosure relate to a three-dimensional fabricating apparatus, a controller, a fabricating method, and a carrier medium storing program code that enhance the accuracy of the shape of a fabricated three-dimensional object.

### Description of the Related Art

There have been developed fabricating apparatuses (so-called "3D printers") that fabricate a three-dimensional object based on input data. Various methods such as fused filament fabrication (FFF), selective laser sintering (SLS), material jetting (MJ), electron beam melting (EBM), and stereolithography with a stereolithography apparatus (SLA) have been proposed as methods for performing three-dimensional fabrication.

In fabrication of a three-dimensional object, there is known a technology in which a shape of a fabricated object is measured and control of fabrication processing is corrected (see JP-2016-215641-A).

However, in JP-2016-215641-A, the accuracy of the three-dimensional object is reduced due to distortion of the housing or components of the three-dimensional fabricating apparatus.

Therefore, a technology that improves the accuracy of a three-dimensional object has been desired.

### SUMMARY

In light of the above-described disadvantage, a purpose of the present disclosure is to provide a three-dimensional fabricating apparatus, a controller, a fabricating method, and a carrier medium carrying program code that enhance the accuracy of a three-dimensional object.

In an aspect of the present disclosure, a three-dimensional fabricating apparatus includes a fabricating device, an imaging device, and a control unit. The fabricating device is configured to fabricate a three-dimensional object. The imaging device is configured to capture an image including identification information marked on the fabricating device. The control unit is configured to control an operation of the fabricating device based on the image captured by the imaging device.

In another aspect of the present disclosure, a control apparatus is configured to control a three-dimensional fabricating apparatus including an imaging device configured to capture an image including identification information marked on a fabricating device. The control apparatus includes a control unit configured to control an operation of the fabricating device based on the image captured by the imaging device.

In still another aspect of the present disclosure, there is provided a fabricating method to be executed by a three-dimensional fabricating apparatus including a fabricating device configured to fabricate a three-dimensional object. The fabricating method includes capturing an image including identification information marked on the fabricating device and controlling an operation of the fabricating device based on the image captured in the capturing.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIGS. 1A and 1B are schematic views of a configuration of a three-dimensional fabricating system according to an embodiment of the present disclosure;
FIG. 2 is a diagram of a configuration of hardware included in a three-dimensional fabricating apparatus according to an embodiment of the present disclosure;
FIG. 3 is a block diagram of software included in a three-dimensional fabricating apparatus according to an embodiment of the present disclosure;
FIG. 4 is a schematic perspective view of a three-dimensional fabricating apparatus according to an embodiment of the present disclosure;
FIG. 5 is a diagram illustrating images including markers captured by an imaging device according to an embodiment of the present disclosure;
FIGS. 6A and 6B are diagrams illustrating markers in images captured according to an embodiment of the present disclosure;
FIG. 7 is a diagram illustrating an example of calculating a position based on markers according to an embodiment of the present disclosure;
FIG. 8 is a flowchart of processing executed by a three-dimensional fabricating apparatus according to an embodiment of the present disclosure;
FIGS. 9A, 9B, and 9C are diagrams illustrating corrections of fabrication data according to an embodiment of the present disclosure; and
FIGS. 10A and 10B are diagrams illustrating test driving according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Although embodiments of the present disclosure are described below, the embodiments are not limited to the embodiments described below. In the drawings referred below, the same reference codes are used for the common elements, and the descriptions thereof are omitted as appropriate. In addition, in the following description, the present disclosure will be described mainly with a fabricating apparatus of an FFF method, but the embodiment is not limited to a fabricating apparatus of the FFF method.

In the following description, for convenience of description, the height direction of a three-dimensional object is defined as a z-axis direction, and a plane orthogonal to the z-axis is defined as an xy plane.

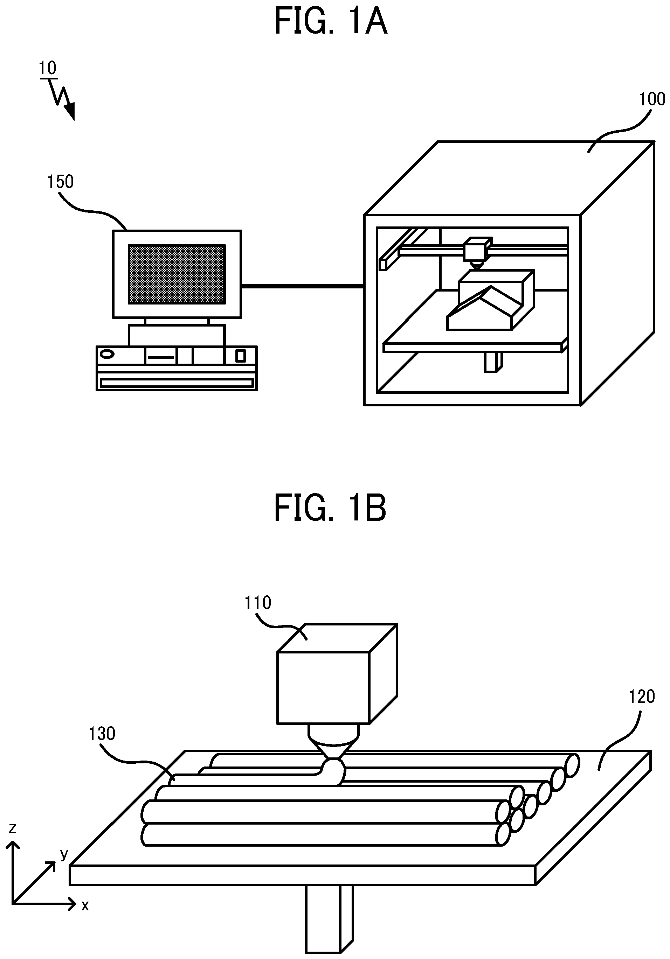

FIGS. 1A and 1B are schematic views of a configuration of a three-dimensional fabricating system 10 according to an embodiment of the present disclosure. As illustrated in FIG. 1A, the three-dimensional fabricating system 10 includes a three-dimensional fabricating apparatus 100 that fabricates a three-dimensional object. The three-dimensional fabricating apparatus 100 receives shape data of a three-dimensional object to be fabricated from, for example, an information processing terminal 150, and fabricates the three-dimensional object based on the shape data. The information processing terminal 150 may operate as a controller that controls processing executed by the three-dimensional fabricating apparatus 100. The three-dimensional fabricating apparatus 100 may incorporate a function of the information processing terminal 150.

As illustrated in FIG. 1B, in fabrication processing by the three-dimensional fabricating apparatus 100, a fabrication material 130 is discharged onto a stage 120 from a fabricating unit 110 that is movable in parallel with the xy plane, and a fabrication layer is fabricated on the xy plane. The three-dimensional fabricating apparatus 100 performs one-dimensional line drawing in the same xy plane to fabricate a fabrication layer corresponding to one layer of a three-dimensional object. When a first fabrication layer is fabricated, the stage 120 is lowered by a height (lamination pitch) corresponding to one layer in the direction along the z-axis. Thereafter, similarly to the first fabrication layer, the fabricating unit 110 is driven to fabricate a second fabrication layer. The three-dimensional fabricating apparatus 100 repeats these operations to stack fabrication layers and fabricate the three-dimensional object.

The fabrication of the three-dimensional object by the FFF method is performed as illustrated in FIG. 1B. The three-dimensional fabricating apparatus 100 of the FFF method includes the fabricating unit 110 including a head that discharges a melted fabrication material 130, and the stage 120 on which a three-dimensional fabricated object is fabricated. Note that, for example, a filament may be used as the fabrication material 130. In a case of a three-dimensional object having a shape that requires a support material in a fabrication process, the fabrication material and the support material may be the same material or different materials.

The fabricating unit 110 is connected to a body of the three-dimensional fabricating apparatus 100 by a rail along the x-axis and a rail along the y-axis, and is movable in parallel with the xy plane by each rail. The stage 120 is movable in the z-axis direction and can adjust the distance between the fabricating unit 110 and the three-dimensional object to be fabricated. Note that the fabricating unit 110 does not necessarily have to move in the direction along the x-axis or the y-axis, and can move in any direction within the xy plane by combining movements on the rails.

The fabricating unit 110 moves while discharging the melted fabrication material 130 onto the stage 120, thereby fabricating a linearly-fabricated object (hereinafter referred to as a "linearly-fabricated object"). The fabricating unit 110 moves parallel to the xy plane while discharging the fabrication material 130. Thus, the linearly-fabricated object is fabricated on the stage 120. The fabricating unit 110 can continuously fabricate a plurality of linearly-fabricated objects having different angles in the same plane. Therefore, the linearly-fabricated object does not necessarily have a linear shape, and may be fabricated in any shape.

As described above, a layered fabricated object (hereinafter referred to as a "fabricated layer") in which a plurality of linearly-fabricated objects are arranged on a single plane is fabricated. FIG. 1B illustrates, as an example, a state in which a first fabrication layer is fabricated and then a second fabrication layer is fabricated.

The stage 120 in FIG. 1B is lowered by a height (lamination pitch) corresponding to one layer in the direction along the z-axis after one fabrication layer is fabricated. Thereafter, similar to the first fabrication layer, the fabricating unit 110 is driven to fabricate the second fabrication layer. The three-dimensional fabricating apparatus 100 repeats these operations to stack fabrication layers and fabricate a three-dimensional object. Then, the melted fabrication material 130 is cured. Thus, the three-dimensional object having a stable shape can be obtained.

In the description of the present disclosure, an assembly in which a plurality of fabrication layers are stacked is referred to as a "fabricated object", and a finished product in which the fabrication processing is completed is referred to as a "three-dimensional object" to distinguish the two.

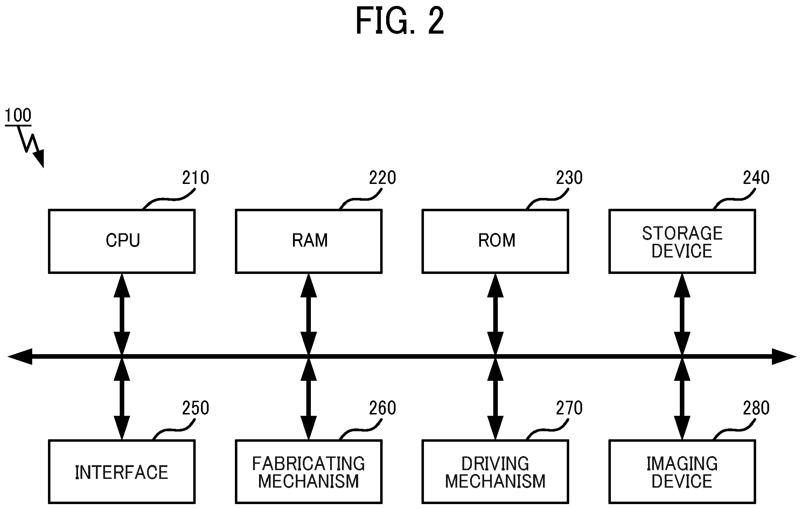

Next, a configuration of hardware of the three-dimensional fabricating apparatus 100 is described. FIG. 2 is a diagram of a configuration of hardware included in the three-dimensional fabricating apparatus 100 according to an embodiment of the present disclosure. The three-dimensional fabricating apparatus 100 includes a central processing unit (CPU) 210, a random access memory (RAM) 220, a read only memory (ROM) 230, a storage device 240, an interface 250, a fabricating mechanism 260, a driving mechanism 270, and an imaging device 280. Such hardware components are connected via a bus.

The CPU 210 is a device that executes a program for controlling the operation of the three-dimensional fabricating apparatus 100 and performs predetermined processing. The RAM 220 is a volatile storage device for providing an execution space for a program to be executed by the CPU 210, and is used for storing and developing programs and data. The ROM 230 is a non-volatile storage device for storing programs and firmware executed by the CPU 210.

The storage device 240 is a readable and writable non-volatile storage device that stores an operating system (OS), various applications, setting information, various data, and the like for causing the three-dimensional fabricating apparatus 100 to function. The interface 250 is a device that connects the three-dimensional fabricating apparatus 100 and other devices. The interface 250 can be connected to, for example, the information processing terminal 150, a network, an external storage device, and the like, and can receive control data of a fabricating operation, shape data of a three-dimensional object, and the like via the interface 250.

The fabricating mechanism 260 constitutes part of a fabricating device according to the present embodiment and fabricates a fabrication layer based on fabrication data. For example, the fabricating mechanism 260 of the FFF method includes a heating mechanism that melts the fabrication material 130, a nozzle that discharges the fabrication material 130, and the like. Alternatively, when the fabricating mechanism 260 uses, for example, an SLS method, the fabricating mechanism 260 includes a laser light source and the like.

The driving mechanism 270 constitutes part of the fabricating device according to the present embodiment and controls the positions of the fabricating unit 110 and the stage 120 based on fabrication data.

The imaging device 280 is a device such as a camera that captures an image including identification information (hereinafter referred to as a "marker") marked on the fabricating mechanism 260 (or the fabricating unit 110) to measure the position. For example, the imaging device 280 may include a charge-coupled device (CCD) or a complementary metal-oxide semiconductor (CMOS) sensor in which light receiving elements are arranged on a plane. The imaging device 280 includes a lens having an angle of view for imaging a range in which the fabricating unit 110 moves above the stage 120.

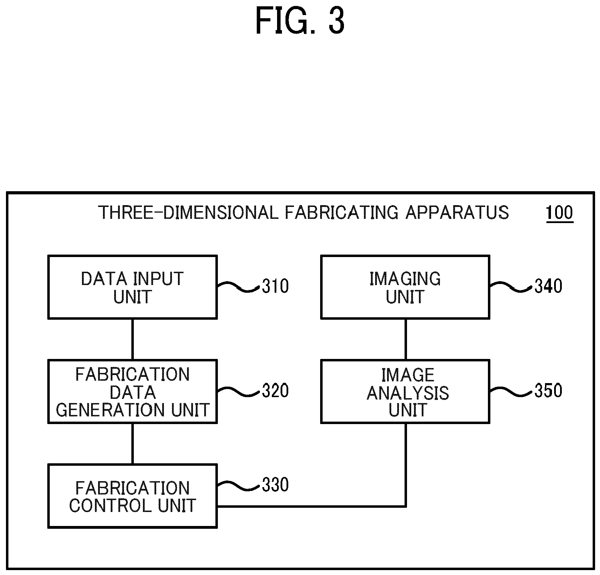

Next, functional units implemented with hardware according to an embodiment of the present disclosure are described with reference to FIG. 3. FIG. 3 is a block diagram of software included in the three-dimensional fabricating apparatus 100 according to the present embodiment. The three-dimensional fabricating apparatus 100 includes a data input unit 310, a fabrication data generation unit 320, a fabrication control unit 330, an imaging unit 340, and an image analysis unit 350. The details of each functional unit are described below.

The data input unit 310 is a unit that receives input of shape data and the like for fabricating a three-dimensional object. The shape data is created by the information processing terminal 150 or the like, and is input to the data input unit 310 via the interface 250.

The fabrication data generation unit 320 divides the shape data input to the data input unit 310 in the height direction of the three-dimensional object and generates fabrication data (so-called slice data) of a plurality of fabrication layers. The three-dimensional object to be fabricated is divided into units of lamination pitch, and the fabrication data is generated as data indicating the shape of the fabrication layer to form each layer to be laminated. As an example, the fabrication data may be binary data indicating whether fabricating is to be performed at coordinates on the xy plane of each layer. In addition, in another embodiment, not only the presence or absence of fabricating at each coordinate but also the fabrication amount at each coordinate, the discharge amount of the fabrication material 130, and the like may be included as parameters of the fabrication data. Note that, in FIG. 3, the fabrication data generation unit 320 is included in the three-dimensional fabricating apparatus 100. However, in some embodiments, the fabrication data generation unit 320 may be included in the information processing terminal 150. In such a case, the fabrication data generated by the information processing terminal 150 is transmitted to the three-dimensional fabricating apparatus 100, and the fabricating processing is executed.

The fabrication control unit 330 controls operations of the fabricating mechanism 260 and the driving mechanism 270 based on the fabrication data. The fabrication control unit 330 adjusts the position of the fabricating unit 110 and the height of the stage 120 based on the fabrication data, thereby fabricating while controlling various parameters such as a fabrication speed and the lamination pitch and algorithms. The fabrication control unit 330 can control the fabrication amount based on the fabrication data. For example, in the FFF method, the discharge amount of the fabrication material 130 can be controlled, and in the SLS method, the intensity of the laser can be controlled. Note that the fabrication control unit 330 can control the operation of the driving mechanism 270 based on the result analyzed by the image analysis unit 350 on the image captured by the imaging unit 340.

The imaging unit 340 controls the operation of the imaging device 280 and captures an image. The imaging unit 340 in the present embodiment captures an image including markers marked on the fabricating mechanism 260. The imaging unit 340 outputs data of the captured image to the image analysis unit 350.

The image analysis unit 350 analyzes an image acquired from the imaging unit 340. The image analysis unit 350 analyzes the image and calculates the size of the marker included in the image. Accordingly, the image analysis unit 350 can calculate the position of the fabricating mechanism 260 at the time when the image is captured. The data indicating the position of the fabricating mechanism 260 calculated by the image analysis unit 350 is output to the fabrication control unit 330 and is used to control the operations of the fabricating mechanism 260 and the driving mechanism 270 together with the fabrication data.

Note that the software blocks described above correspond to functional units implemented by the CPU 210 executing programs according to the present embodiment to function each hardware. All the functional units illustrated in each embodiment may be implemented in software, or part or all of the functional units may be implemented as hardware that provides equivalent functions.

Furthermore, all of the functional units described above may not be included in a configuration of the software blocks illustrated in FIG. 3. For example, in another embodiment, each functional unit may be realized by cooperation between the three-dimensional fabricating apparatus 100 and the information processing terminal 150.

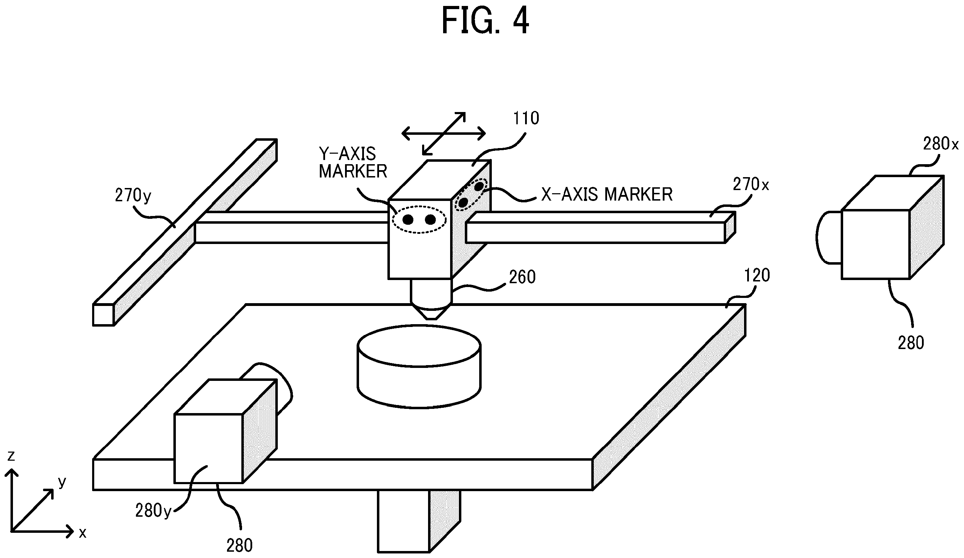

FIG. 4 is a schematic perspective view of the three-dimensional fabricating apparatus 100 according to an embodiment of the present disclosure. The driving mechanism 270 of the present embodiment includes a rail 270x that moves the position of the fabricating unit 110 in an x-axis direction and a rail 270y that moves the position of the fabricating unit 110 in a y-axis direction. The driving mechanism 270 drives a motor to move the fabricating unit 110 along the rail 270x and the rail 270y, and the fabricating unit 110 can be moved to a predetermined position on the xy plane.

Regions circled by broken lines in FIG. 4 indicate an example of markers according to an embodiment of the present disclosure. As illustrated in FIG. 4, in the three-dimensional fabricating apparatus 100 of the present embodiment, two markers are marked on the fabricating unit 110. The markers include an x-axis marker facing the x-axis direction and a y-axis marker facing the y-axis direction. Note that FIG. 4 illustrates the markers having two dots. However, the embodiments are not particularly limited to such a configuration, and the markers may be in any form.

Further, the three-dimensional fabricating apparatus 100 according to the present embodiment includes two imaging devices 280 (an imaging device 280x and an imaging device 280y) that capture images of the x-axis marker and the y-axis marker, respectively. As illustrated in FIG. 4, the imaging devices 280 according to the present embodiment are the imaging device 280x and the imaging device 280y. The imaging device 280x and the imaging device 280y capture images in the x-axis direction and in the y-axis direction, respectively. The imaging device 280x captures an image including the x-axis marker, and the imaging device 280y captures an image including the y-axis marker. Note that the imaging device 280x and the imaging device 280y are capable of capturing images of each marker in a movable range of the fabricating unit 110.

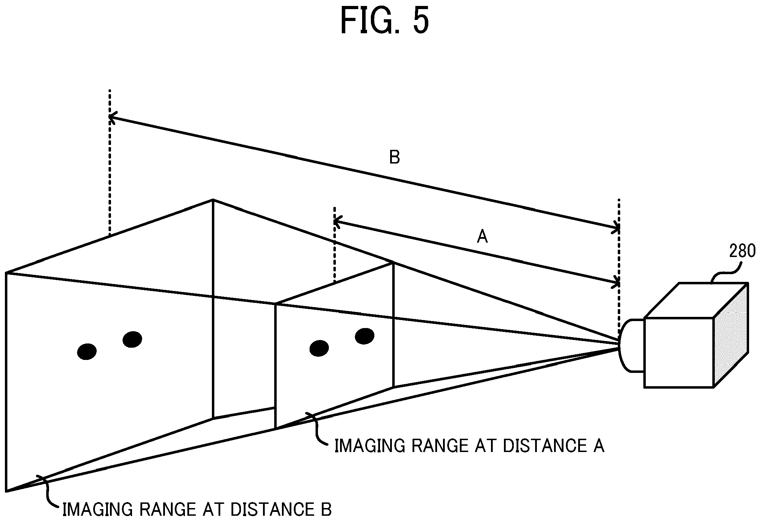

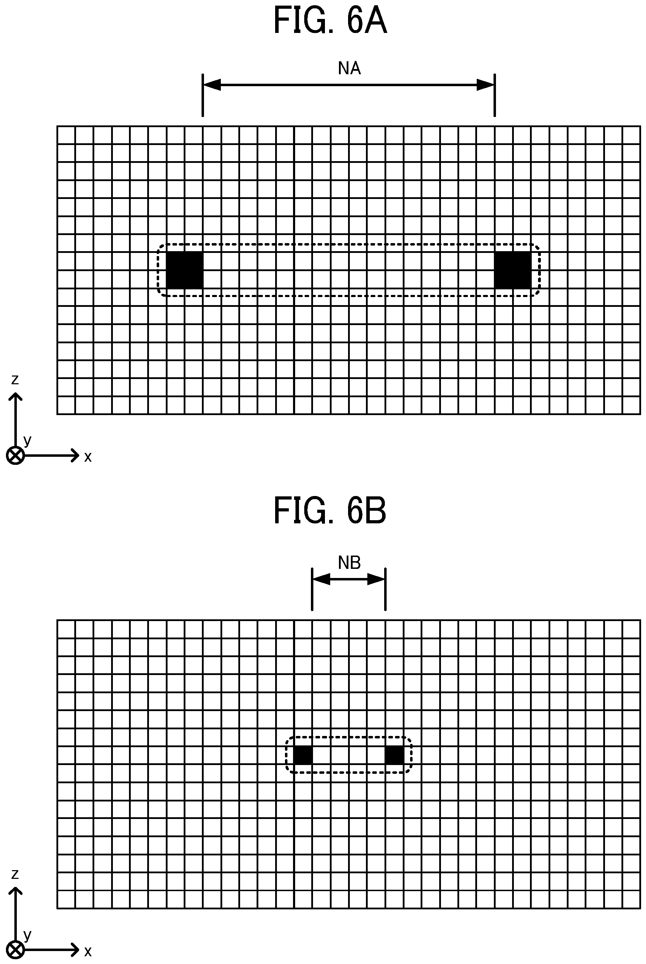

Next, an image captured by one of the imaging devices 280 is described with reference to FIGS. 5 and 6 according to an embodiment of the present disclosure. FIG. 5 is a diagram illustrating images including markers captured by one of the imaging devices 280 according to the present embodiment. FIGS. 6A and 6B are diagrams illustrating markers in images captured according to the present embodiment.

First, FIG. 5 is described. FIG. 5 illustrates an imaging range when the distance between one of the imaging devices 280 and the marker is A and an imaging range when the distance between one of the imaging devices 280 and the marker is B. The imaging device 280 and the marker illustrated in FIG. 5 may be the imaging device 280x and the corresponding marker along the x-axis direction or the imaging device 280y and the corresponding marker along the y-axis direction.

Each of the imaging device 280x and the imaging device 280y includes a lens having a predetermined angle of view. The imaging range of the image captured by each of the imaging device 280x and the imaging device 280y is determined by the angle of view of the lens and the distance to a subject to be captured. FIG. 5 illustrates an imaging range at the distance A and an imaging range at the distance B. Since the distance B is longer than the distance A, the imaging range at the distance B is wider.

On the other hand, since the markers as the subjects to be captured are the same, the size of the markers in the image change depending on the distance. That is, the size of the marker in the image captured at the distance A is relatively larger than the size of the marker in the image captured at the distance B.

Therefore, if the angle-of-view characteristics of the lens and the size of the marker are known as design items, the distance from the imaging device 280 to the fabricating unit 110 at the time of image capture can be calculated based on the size of the marker obtained by analyzing the image.

A description is now given with reference to FIGS. 6A and 6B. FIG. 6A illustrates an example of an image captured when the distance is A. FIG. 6B illustrates an example of an image captured when the distance is B. FIGS. 6A and 6B illustrate examples of an image (that is, an image captured by the imaging device 280y) on a zx plane, and illustrate examples of an image in which a plurality of pixels are arranged in the zx plane. In FIGS. 6A and 6B, regions indicated by broken lines illustrate pixels representing the image of the markers captured.

As illustrated in FIGS. 6A and 6B, the size of the marker in the image can be obtained based on the number of pixels constituting the marker. In the examples of FIGS. 6A and 6B, the numbers of pixels between two dots constituting the marker are calculated as sizes NA and NB of the marker, respectively.

The image analysis unit 350, as described above, can calculate the size of the marker in the image. Since the angle-of-view characteristics of the lens and the size of the marker are known, the image analysis unit 350 can calculate the position of the fabricating unit 110 at the time of image capture based on the size of the marker in the image.

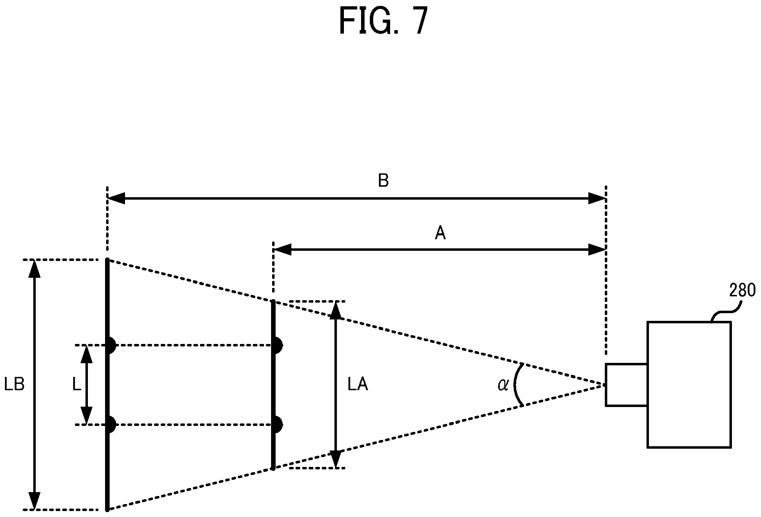

Next, a specific example of calculating the position of the fabricating unit 110 is described with reference to FIG. 7. FIG. 7 is a diagram of an example of calculating the position of the fabricating unit 110 based on a marker according to an embodiment of the present disclosure. FIG. 7 is a top view of the three-dimensional fabricating apparatus 100 according to the present embodiment. In the description of FIG. 7, FIGS. 6A and 6B are referred as appropriate.

The imaging device 280 is fixed at a predetermined position in the three-dimensional fabricating apparatus 100 and has a predetermined angle of view α. Accordingly, as illustrated in FIG. 7, the distance can be calculated by calculating a ratio based on the size of the marker of the image at the distance A and the size of the marker of the image at the distance B.

First, when the size of the imaging range at the distance A is LA and the size of the imaging range at the distance B is LB, LB / LA = B / A is obtained (formula 1). In the present embodiment, since the number of pixels N of the captured images is constant as illustrated in FIGS. 6A and 6B, the number of pixels NA corresponding to the size of the marker at the distance A and the number of pixels NB corresponding to the size of the marker at the distance B, where L is the size of the marker, can be calculated from NA = L / (LA / N) (formula 2) and NB = L / (LB / N) (formula 3), respectively. When the formulas 1, 2, and 3 are rearranged, B = (NA / NB) × A is obtained. Therefore, the value of the distance B, that is, the position of the fabricating unit 110 can be calculated based on the image captured at the distance B by measuring in advance the distance A serving as a calculation reference and the number of pixels NA corresponding to the size of the marker at the distance A.

Note that the marker includes two dots in the present embodiment. However, for example, a marker including three or more dots may be used, and the position of the fabricating unit 110 may be calculated from an average value of distances between the dots. As described above, a plurality of pieces of identification information are provided, thus allowing the accuracy of calculation of the position of the fabricating unit 110 to be enhanced.

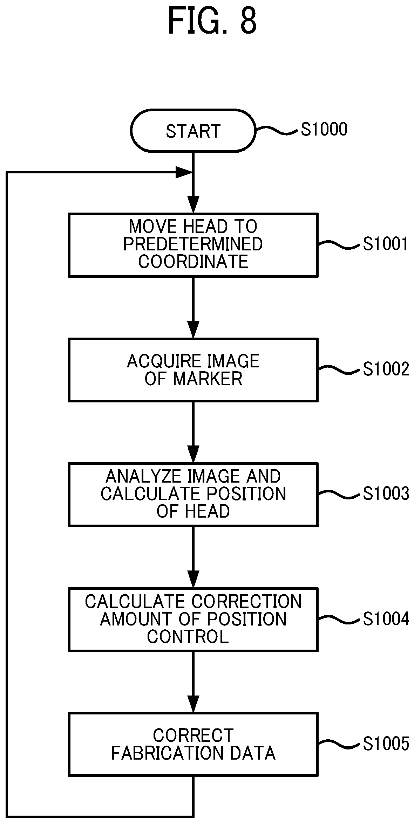

Next, a process executed by the three-dimensional fabricating apparatus 100 is described. FIG. 8 is a flowchart of the process executed by the three-dimensional fabricating apparatus 100 according to an embodiment of the present disclosure. The three-dimensional fabricating apparatus 100 starts the process from step S1000. Note that the process illustrated in FIG. 8 can be performed at any timing, and may be performed in a process of fabricating a three-dimensional object, for example.

In step S1001, the fabrication control unit 330 controls the driving mechanism 270 based on fabrication data to move the fabricating unit 110 to predetermined coordinates. Note that in a case in which fabricating of a three-dimensional object is involved, the fabrication control unit 330 may control the fabricating mechanism 260 based on the fabrication data to execute fabrication processing such as discharge of the fabrication material 130 after moving to predetermined coordinates in step S1001.

In step S1002, the imaging unit 340 captures an image of the markers marked on the fabricating unit 110 and acquires the image. The imaging unit 340 outputs the acquired image to the image analysis unit 350.

In step S1003, the image analysis unit 350 analyzes the image acquired from the imaging unit 340 and calculates the distance from the imaging device 280 to the markers at the time of imaging, that is, the position of the fabricating unit 110. Data indicating the calculated position of the fabricating unit 110 is output to the fabrication control unit 330.

In step S1004, the fabrication control unit 330 compares the position calculated in step S1003 with the fabrication data that is the basis for controlling the position of the fabricating unit 110 in step S1001, and calculates the correction amount of the position control.

Next, in step S1005, the fabrication control unit 330 corrects the fabrication data based on the correction amount of the position control calculated in step S1004. After the fabrication data is corrected in step S1005, the process returns to step S1001, and fabrication layers fabricated by repeating each processing are laminated, thus fabricating a three-dimensional object. When fabricating of the three-dimensional object is not performed, the correction amount of the position control calculated in step S1004 may be stored in the storage device 240 or the like.

As in the process illustrated in FIG. 8, the correction is performed based on the position of the fabricating unit 110 calculated based on the image, thus allowing the accuracy of fabrication to be enhanced. The position of the fabricating unit 110 can also be calculated by sensors such as a rotary encoder. However, calculating the position based on the image can eliminate errors caused by physical factors such as deflection of the rails and distortion of the housing of the three-dimensional fabricating apparatus 100. Thus, more accurate correction can be performed and the accuracy of fabrication can be further enhanced.

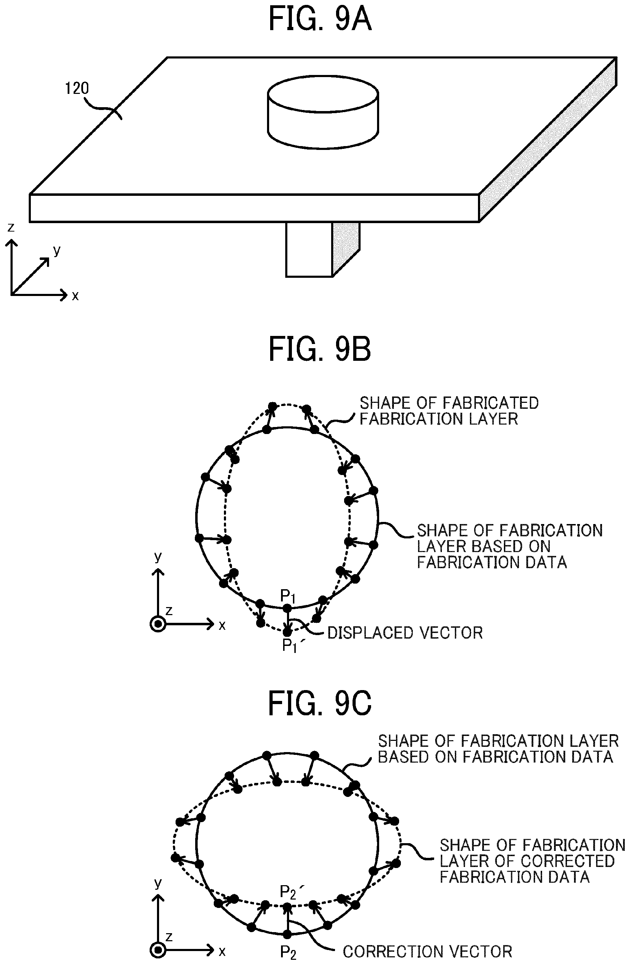

FIGS. 9A, 9B, and 9C are diagrams each illustrating correction of fabrication data according to an embodiment of the present disclosure. Note that, in FIGS. 9A, 9B, and 9C, the present embodiment is described by a case in which the fabrication data of a next layer is corrected based on the marker captured when fabricating one fabrication layer. FIG. 9A illustrates an example of the shape of a three-dimensional object fabricated. In the present embodiment, a cylindrical three-dimensional object is fabricated on the stage 120 as an example.

When a three-dimensional object having a cylindrical shape is fabricated as illustrated in FIG. 9A, the three-dimensional fabricating apparatus 100 stacks fabrication layers fabricated in a circular shape. In other words, fabrication data for controlling the fabricating mechanism 260 and the driving mechanism 270 so as to fabricate circular fabrication layers is input to the fabrication control unit 330.

FIG. 9B is a top view of a fabrication layer in a case in which the fabrication layer is fabricated in the process of fabricating a three-dimensional object. The solid line in FIG. 9B illustrates the shape of a desired fabrication layer, and the broken line illustrates the shape of a fabrication layer that has actually been fabricated. FIG. 9B illustrates a case in which the fabrication layer is fabricated in an elliptical shape due to the deflection of the rail, the distortion of the housing of the three-dimensional fabricating apparatus 100, the surrounding environment, and other factors, when the fabrication layer in a circular shape is normally fabricated.

In the process of fabricating the fabrication layer, the imaging unit 340 and the image analysis unit 350 perform processing corresponding to steps S1002 and S1003 in FIG. 8, and calculate the position of the fabricating unit 110 as required. A point Pi in FIG. 9B indicates the position of the fabricating unit 110 based on the fabrication data at a certain point in the fabricating process. On the other hand, a point P₁' in FIG. 9B indicates the position of the fabricating unit 110 calculated based on the image of the marker captured at the time point. That is, in the example of FIG. 9B, the fabricating unit 110 is normally located at the position of the point Pi, but is located at the position of the point P₁', which reduces the fabricating accuracy of the fabrication layer. In the present embodiment, a vector indicating a difference between the point Pi and the point P₁' is extracted as a displaced vector. Note that the position of the fabricating unit 110 based on the fabrication data at a certain point in time and the position of the fabricating unit 110 calculated based on the image of the marker captured at the certain point in time are deviated from each other similarly at other points in FIG. 9B, and the displaced vector for each point is extracted.

FIG. 9C is a top view of the fabrication layer fabricated after fabricating the fabrication layer illustrated in FIG. 9B. The solid line in FIG. 9C illustrates the shape of the fabrication layer based on the fabrication data, and the broken line illustrates the shape of the fabrication layer based on the corrected fabrication data. The fabrication control unit 330 corrects the fabrication data based on the result of the image analysis by the image analysis unit 350. In the example of FIG. 9C, the fabrication data is corrected using the inverse vector of the displaced vector of FIG. 9B as the correction vector. A point P₂ in FIG. 9C indicates a coordinate corresponding to the point Pi in FIG. 9B in the cylindrical three-dimensional object. That is, the inverse vector of the displaced vector of the point Pi in FIG. 9B is used as a correction vector of the point P₂ in FIG. 9C to correct the fabrication data. Similarly, the inverse vector of the displaced vector of the corresponding coordinates is set as the correction vector for other points in FIG. 9C. Thus, the corrected fabrication data as indicated by the broken line in FIG. 9C can be obtained. The fabrication control unit 330 controls the fabricating mechanism 260 and the driving mechanism 270 based on the corrected fabrication data. Thus, a three-dimensional object having a desired shape (a cylindrical shape in the example of FIG. 9) can be fabricated.

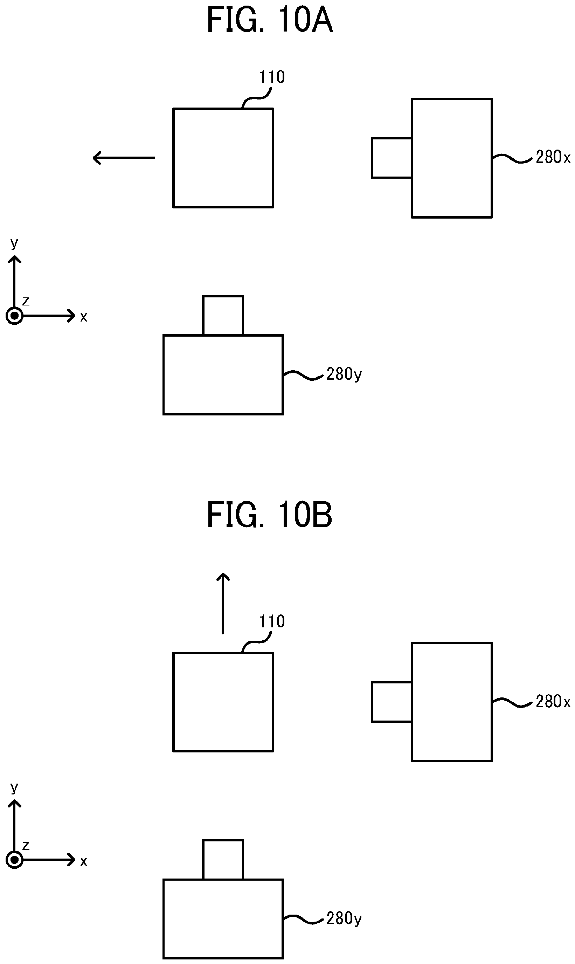

In the embodiment described with reference to FIG. 8 and the like, the marker is captured and the correction amount is calculated in the process of fabricating the three-dimensional object. However, embodiments of the present disclosure are not limited to such a configuration. Therefore, the correction amount may be calculated without performing the fabricating process. For example, the correction amount may be calculated by test driving. FIGS. 10A and 10B are diagrams each illustrating test driving according to an embodiment of the present disclosure.

FIG. 10A illustrates an example of test driving for correcting the position of the fabricating unit 110 in the x-axis direction. The fabricating unit 110 moves in the direction of an arrow in FIG. 10A in the test driving. The imaging device 280x captures images of the moving fabricating unit 110 as needed and acquires images of the marker. Thereafter, the image analysis unit 350 analyzes the images and calculates the positions of the fabricating unit 110 when each of the images is captured. Then, the image analysis unit 350 compares the coordinates of the positions of the fabricating unit 110 based on the control data for performing the test driving with the coordinates of the positions of the fabricating unit 110 calculated by the image analysis to calculate the displaced vector and the correction vector.

As illustrated in FIG. 10B, the correction amount can be calculated by test driving in the y-axis direction in the same manner. FIG. 10B illustrates an example of test driving for correcting the position of the fabricating unit 110 in the y-axis direction. The fabricating unit 110 moves in the direction indicated by an arrow in FIG. 10B in the test driving. The imaging device 280y captures the moving fabricating unit 110 as needed and acquires images of the marker. Thereafter, the image analysis unit 350 analyzes the images and calculates the positions of the fabricating unit 110 when each of the images is captured. Then, the image analysis unit 350 compares the coordinates of the positions of the fabricating unit 110 based on the control data for performing the test driving with the coordinates of the positions of the fabricating unit 110 calculated by the image analysis to calculate the displaced vector and the correction vector.

Using the correction vector calculated in the above-described manner as a correction parameter when fabricating the three-dimensional object can restrain a degradation in fabrication accuracy caused by deflection of the rail, distortion of the housing of the three-dimensional fabricating apparatus 100, the surrounding environment, and other factors.

According to the embodiments of the present disclosure described above, a three-dimensional fabricating apparatus, a control apparatus, a fabricating method, and a storage medium storing program code that improve the accuracy of a three-dimensional object can be provided.

Each of the functions of the above-described embodiments of the present disclosure can be implemented by a device-executable program written in, for example, C, C++, C#, and Java (registered trademark). The program according to embodiments of the present disclosure can be stored in a device-readable recording medium to be distributed. Examples of the recording medium include a hard disk drive, a compact disk read only memory (CD-ROM), a magneto-optical disk (MO), a digital versatile disk (DVD), a flexible disk, an electrically erasable programmable read-only memory (EEPROM (registered trademark)), and an erasable programmable read-only memory (EPROM). The program can be transmitted over a network in a form with which another computer can execute the program.

Although the present disclosure has been described above with reference to the embodiments, the present disclosure is not limited to the above-described embodiments. Within the range of embodiments that can be estimated by skilled person, those exhibiting functions and effects of the present disclosure are included in the scope of the present disclosure.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

Any one of the above-described operations may be performed in various other ways, for example, in an order different from the one described above.

## Claims

1. A three-dimensional fabricating apparatus (100) comprising:
a fabricating device (110) configured to fabricate a three-dimensional object;
an imaging device (280) configured to capture an image including identification information marked on the fabricating device (110); and
a control unit (330) configured to control an operation of the fabricating device (110) based on the image captured by the imaging device (280).

2. The three-dimensional fabricating apparatus (100) according to claim 1, further comprising another imaging device (280y) configured to capture the image,
wherein the imaging device (280x) is configured to capture the image in a first direction, and said another imaging device (280y) is configured to capture the image in a second direction orthogonal to the first direction, and
wherein the identification information marked on the fabricating device (110) includes:
first identification information captured by the imaging device (280x); and
second identification information captured by said another imaging device (280y).

3. The three-dimensional fabricating apparatus (100) according to claim 2, wherein the first identification information and the second identification information are arranged at an angle of 90 degrees on a plane on which the fabricating device (110) moves.

4. The three-dimensional fabricating apparatus (100) according to any one of claims 1 to 3,
wherein the control unit (330) is configured to:
analyze the image to calculate a distance between the fabricating device (110) and the imaging device (280); and
control the operation of the fabricating device (110) based on the distance calculated.

5. The three-dimensional fabricating apparatus (100) according to claim 4,
wherein the control unit (330) is configured to calculate the distance based on a size of the identification information in the image.

6. The three-dimensional fabricating apparatus (100) according to claim 5,
wherein the control unit (330) is configured to calculate the size of the identification information in the image based on an angle of view characteristic of the imaging device (280).

7. A control apparatus (150) configured to control a three-dimensional fabricating apparatus (100) including an imaging device (280) configured to capture an image including identification information marked on a fabricating device (110), the control apparatus (150) comprising a control unit (330) configured to control an operation of the fabricating device (110) based on the image captured by the imaging device (280).

8. The control apparatus (150) according to claim 7,
wherein the control apparatus (150) is configured to:
analyze the image to calculate a distance between the fabricating device (110) and the imaging device (280); and
control the operation of the fabricating device (110) based on the distance between the fabricating device (110) and the imaging device (280).

9. The control apparatus (150) according to claim 8,
wherein the control unit (330) is configured to calculate the distance between the fabricating device (110) and the imaging device (280) based on a size of the identification information in the image.

10. The control apparatus (150) according to claim 9,
wherein the control unit (330) is configured to calculate the size of the identification information in the image based on an angle of view characteristic of the imaging device (280).

11. A fabricating method to be executed by a three-dimensional fabricating apparatus (100) including a fabricating device (110) configured to fabricate a three-dimensional object, the fabricating method comprising:
capturing an image including identification information marked on the fabricating device (110); and
controlling an operation of the fabricating device (110) based on the image captured in the capturing.
